# EUROPEAN PATENT APPLICATION

(11) **EP 4 418 171 A1**
(43) Date of publication of application: **21.08.2024**
(21) Application number: 21960637.3
(22) Date of filing: 14.10.2021
(51) Int. Cl.: G06N 99/00

(54) **INFORMATION PROCESSING DEVICE, METHOD, PROGRAM, AND SYSTEM**

(71) Applicant: Aising Ltd., Tokyo 107-0052 (JP)
(72) Inventor: SUGAWARA Shimon, Tokyo 107-0052 (JP); IDESAWA Junichi, Tokyo 107-0052 (JP)
(74) Representative: Kilian Kilian & Partner mbB
(86) International application number: PCT/JP2021/038063
(87) International publication number: WO 2023/062780

(57) **Abstract**

An information processing apparatus is provided which includes a search condition specification processing unit that specifies a search condition on the basis of a branch condition associated with each node of one or a plurality of tree structure models and related to a manipulable variable, and an input data specification processing unit that specifies input data from which target output data or output data close to the target output data is to be generated in the tree structure model on the basis of the search condition.

## Description

### Technical Field

The present invention relates to an information processing apparatus, method, program, and system.

### Background Art

A model for generating prediction (inference) output data with respect to predetermined input data has been generated on the basis of a data set including input data and correct answer data corresponding to the input data. For example, in recent years, a learned model has been generated by performing training on a predetermined model using a machine learning technique to predict output data with respect to unknown input data (for example, Patent Literature 1).

In a case where there is target output data, there is a case where it is requested to inversely specify input data from which such output data is to be generated from a model. For example, concerning an air conditioning system, a model that receives input data of a current set temperature and outputs an indoor temperature T minutes later as prediction output data will be assumed. In this event, there is a case where it is desired to inversely specify an indoor temperature to be set currently so that the temperature reaches a predetermined temperature X T minutes later.

There are some possible methods for specifying input data for generating target output data in such a model.

The first method is a method in which all possible input values are input to a model, output data thereof is observed, and input data for which the output data is the closest to target output data is specified. The second method is a method in which random numbers, and the like, are input to a model only a specified number of times, output data thereof is observed, and input data for which the output data is the closest to ideal output data is specified.

### Citation List

### Patent Literature

Patent Literature 1: Japanese Patent No. 6831523

### Summary of Invention

### Technical Problem

However, with the first method, all possible values are input, and thus, calculation cost increases, and enormous calculation time is required. Further, with the second method, if the specified number of times is insufficient, there is a possibility of insufficiency of search. Further, random numbers, and the like, are used, and thus, there is a possibility that a unique result cannot be obtained.

The present invention has been made against the above-described technical background and an object thereof is to efficiently specify input data from which target output data or output data close to the target output data is to be generated.

Further other objects and effects of the present invention will be easily understood by a person skilled in the art by referring to the following description of the specification.

### Solution to Problem

The above-described technical problem can be solved by an information processing apparatus, and the like, having the following configuration.

In other words, an information processing apparatus according to the present invention includes a search condition specification processing unit that specifies a search condition on the basis of a branch condition associated with each node of one or a plurality of tree structure models and related to a manipulable variable, and an input data specification processing unit that specifies input data from which target output data or output data close to the target output data is to be generated in the tree structure model on the basis of the search condition.

According to such a configuration, the search condition is specified by referencing the branch condition related to the manipulable variable among the branch conditions associated with the respective nodes of the tree structure models, so that it is possible to efficiently specify input data from which target output data or output data close to the target output data is to be generated.

The search condition specification processing unit may further include a branch condition storage processing unit that performs determination processing regarding the branch condition for each node of the tree structure model and performs processing of storing the branch condition in a case where a branch condition related to a manipulable variable is associated with the node.

According to such a configuration, determination processing is individually performed for each node, and only branch conditions related to manipulable variables are stored, so that it is possible to promptly specify the search condition.

The input data specification processing unit may input one or a plurality of pieces of temporary input data that satisfy the search condition to the tree structure model and specify temporary input data for which output data of the tree structure model corresponding to the temporary input data becomes the target output data or becomes closest to the target output data as the input data among the temporary input data.

According to such a configuration, it is possible to efficiently specify input data from which a desired output is to be generated by performing search using temporary input data that satisfies the search condition.

The search condition specification processing unit may further include a sorting processing unit that sorts the branch conditions in accordance with a magnitude relationship and specifies the sorted branch conditions as the search condition, and the input data specification processing unit may specify an arbitrary value between adjacent branch conditions in the search condition as the input data.

According to such a configuration, it is possible to promptly specify appropriate input data.

The information processing apparatus may further include a variable setting unit that performs setting regarding manipulability of a variable.

According to such a configuration, it is possible to perform setting as to which variable is manipulable, or the like, so that it is possible to improve versatility.

The information processing apparatus may further include a target output data setting unit that sets content of the target output data.

According to such a configuration, a target output can be freely set, so that it is possible to improve versatility.

The input data specification processing unit may further include a condition determination unit that determines whether or not the specified input data satisfies a predetermined condition.

According to such a configuration, determination is performed as to whether or not the predetermined condition is satisfied, so that, for example, it is possible to set only input data that can be put into practical use as final input data.

There may be a plurality of pieces of the input data.

According to such a configuration, it is possible to select optimal input data while taking into account knowledge, or the like, of a user, or the like, from a plurality of pieces of the input data.

There may be a plurality of the tree structure models, and the search condition specification processing unit may further include a branch condition integration processing unit that generates the search condition by integrating the branch conditions.

According to such a configuration, it is possible to integrate and unify a plurality of branch conditions.

The tree structure may be a learned decision tree.

According to such a configuration, it is possible to efficiently specify input data that makes an output optimal in the learned decision tree.

The plurality of tree structure models may be obtained through ensemble learning.

According to such a configuration, it is possible to efficiently specify input data that makes an output optimal in the tree structure models obtained through ensemble learning.

The present invention viewed from another aspect can be conceptualized as a method. In other words, an information processing method according to the present invention includes a search condition specification processing step of specifying a search condition on the basis of a branch condition associated with each node of one or a plurality of tree structure models and related to a manipulable variable, and
an input data specification processing step of specifying input data from which target output data or output data close to the target output data is to be generated in the tree structure model on the basis of the search condition.

The present invention viewed from another aspect can be conceptualized as a computer program. In other words, an information processing program according to the present invention includes a search condition specification processing step of specifying a search condition on the basis of a branch condition associated with each node of one or a plurality of tree structure models and related to a manipulable variable, and an input data specification processing step of specifying input data from which target output data or output data close to the target output data is to be generated in the tree structure model on the basis of the search condition.

The present invention viewed from another aspect can be conceptualized as a system. In other words, an information processing system according to the present invention includes a search condition specification processing unit that specifies a search condition on the basis of a branch condition associated with each node of one or a plurality of tree structure models and related to a manipulable variable, and
an input data specification processing unit that specifies input data from which target output data or output data close to the target output data is to be generated in the tree structure model on the basis of the search condition.

### Advantageous Effect of Invention

According to the present invention, it is possible to efficiently specify input data from which target output data or output data close to the target output data is to be generated.

### Brief Description of Drawings

[Figure 1] Figure 1 is a schematic configuration diagram of an information processing apparatus.
[Figure 2] Figure 2 is a functional block diagram of the information processing apparatus.
[Figure 3] Figure 3 is a general flowchart regarding operation of the information processing apparatus.
[Figure 4] Figure 4 is a detailed flowchart of learning processing.
[Figure 5] Figure 5 is learning data according to a first embodiment.
[Figure 6] Figure 6 is a conceptual diagram according to one example of a decision tree.
[Figure 7] Figure 7 is a detailed flowchart of processing of specifying a search condition.
[Figure 8] Figure 8 is a detailed flowchart of processing of specifying optimal input data.
[Figure 9] Figure 9 is a general flowchart (second embodiment) regarding operation of the information processing apparatus.
[Figure 10] Figure 10 is a detailed flowchart (second embodiment) of learning processing.
[Figure 11] Figure 11 is a conceptual diagram of a random forest.
[Figure 12] Figure 12 is a detailed flowchart (second embodiment) of processing of specifying a search condition.
[Figure 13] Figure 13 is a detailed flowchart (second embodiment) of processing of specifying optimal input data.

### Description of Embodiments

Embodiments of the present invention will be described in detail below with reference to the accompanying drawings.

### (1. First embodiment)

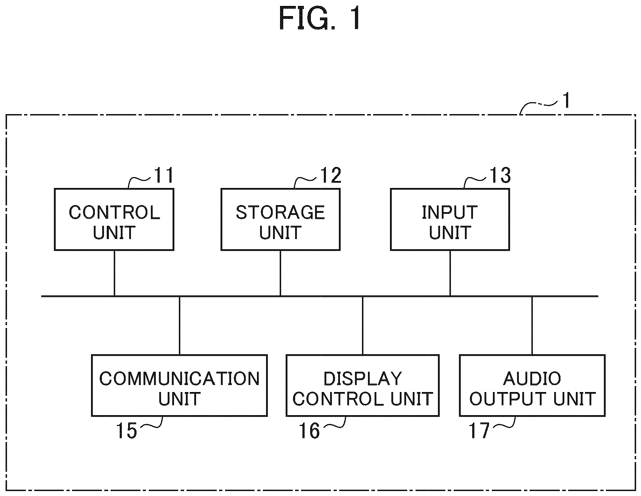

A first embodiment will be described with reference to Figure 1 to Figure 8. As the first embodiment, an example where the present invention is applied to an information processing apparatus will be described. Here, the information processing apparatus is a computer including an arithmetic device and a memory as will be described later, and includes, for example, a personal computer, a microcomputer, a device, or the like, connected to these or including these. Note that functions corresponding to the information processing apparatus may be implemented with circuits by an IC such as an FPGA.

### (1.1 Configuration)

Figure 1 is a schematic configuration diagram of an information processing apparatus 1. As can be clear from Figure 1, the information processing apparatus 1 includes a control unit 11, a storage unit 12, an input unit 13, a communication unit 15, a display control unit 16, and a audio output unit 17. Note that in Figure 1, illustration regarding a power supply system is omitted.

The control unit 11, which is an arithmetic device such as a CPU or a GPU, executes various kinds of programs which will be described later. The storage unit 12, which is a memory such as a ROM, a RAM, a hard disk or a flash memory, stores various kinds of programs and data which will be described later. The input unit 13 processes signals input by an input device such as a keyboard and a mouse and provides the processed signals to the control unit 11.

The communication unit 15 is a unit for performing communication with an external device in a wired or wireless manner. The display control unit 16 is connected to a display device such as a display which is not illustrated and performs processing, or the like, of outputting an image, or the like, generated by the control unit 11 to the display device. The audio output unit 17 performs processing of outputting an audio signal generated by the control unit 11 to a speaker, or the like, which is not illustrated.

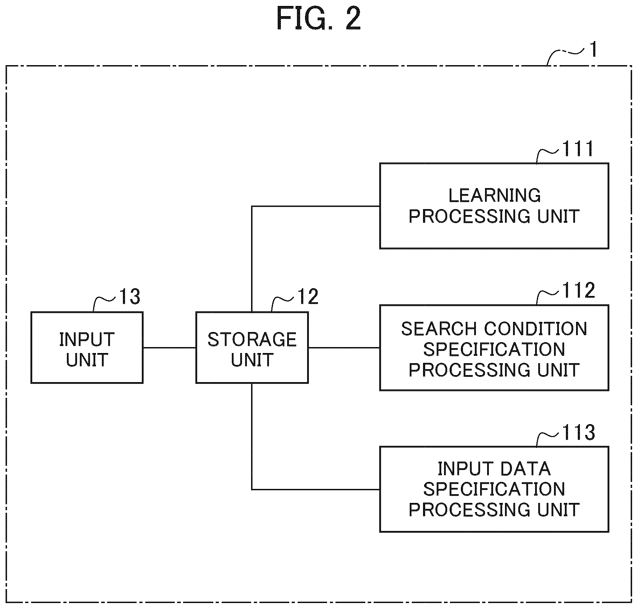

Figure 2 is a functional block diagram of the information processing apparatus 1. As can be clear from Figure 2, the storage unit 12 is connected to the input unit 13, a learning processing unit 111, a search condition specification processing unit 112, and an input data specification processing unit 113.

As will be described later, information input via the input unit 13 is stored in the storage unit 12. Further, the learning processing unit 111 reads out parameters related to a learning model and data to be learned from the storage unit 12, performs learning processing and stores the learned model in the storage unit 12.

Further, the search condition specification processing unit 112 performs processing of specifying a search condition by reading out the learned model and performing analysis which will be described later. In addition, the input data specification processing unit 113 performs processing of specifying optimal input data that outputs a target output value or a value close to the target output value on the basis of the search condition.

Note that the hardware configurations illustrated in Figure 1 and Figure 2 are examples, and various modifications can be made with a method known by a person skilled in the art. For example, part of functions of the information processing apparatus 1 may be integrated or distributed or may be implemented as an information processing system via a network.

### (1.2 Operation)

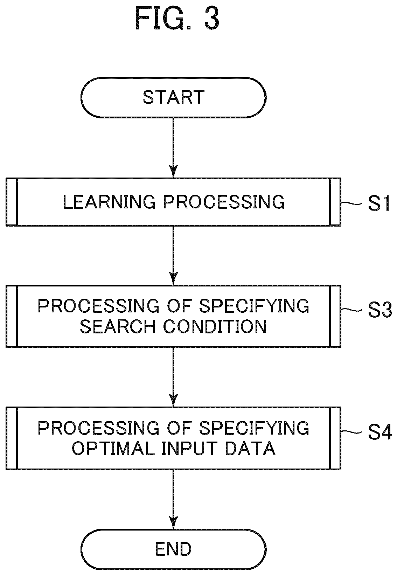

Figure 3 is a general flowchart regarding operation of the information processing apparatus 1 according to the present embodiment.

As can be clear from Figure 3, when processing is started, the learning processing unit 111 performs learning processing to generate a learned model (S1).

After the learning processing, the search condition specification processing unit 112 performs processing of specifying a search condition for specifying optimal input data that outputs a target output value or a value close to the target output value (S3).

Thereafter, the input data specification processing unit 113 performs processing of specifying optimal input data on the basis of the specified search condition (S5). The processing will be described in detail below.

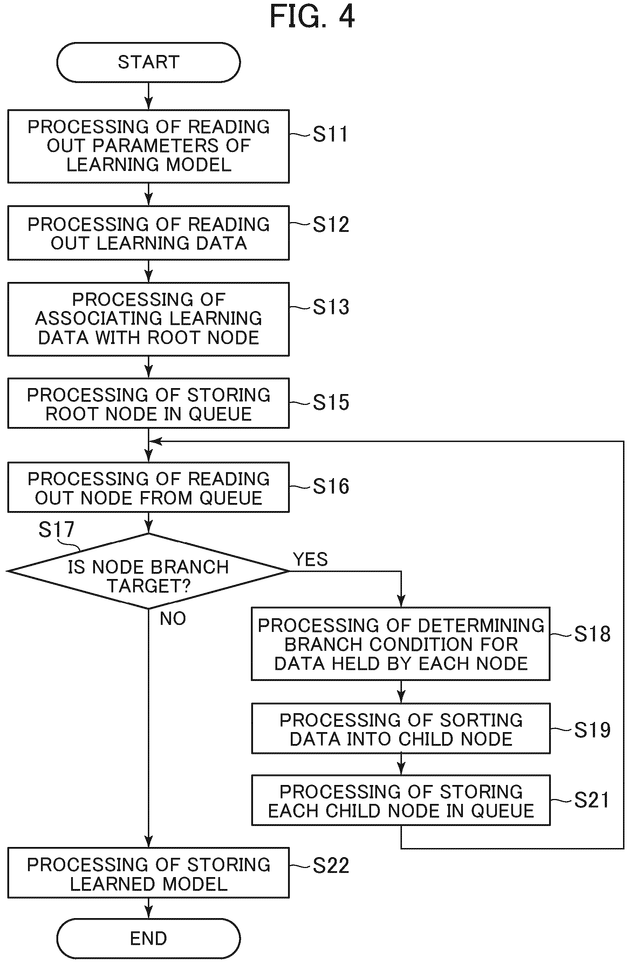

Figure 4 is a detailed flowchart of the learning processing (S1). As can be clear from Figure 4, when the processing is started, the learning processing unit 111 performs processing of reading out parameters regarding a learning model. The learning model is a decision tree in the present embodiment, and the parameters are parameters necessary for machine learning of the decision tree, such as a maximum depth.

After the processing of reading out the parameters, the learning processing unit 111 performs processing of reading out learning data (S12). The learning data is a data set including one or a plurality of pieces of input data and one or a plurality of pieces of correct answer data.

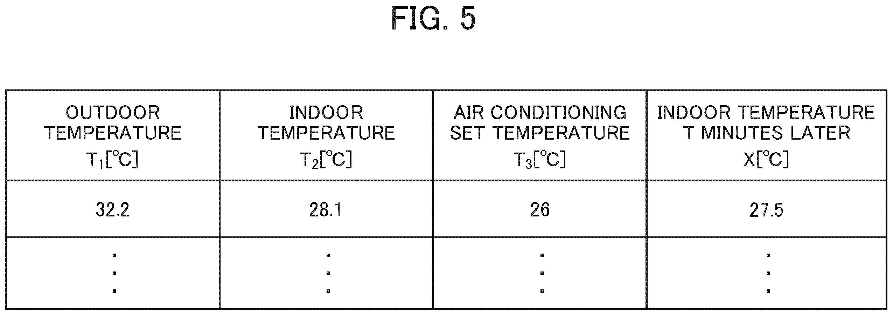

Figure 5 is learning data according to the present embodiment. As can be clear from Figure 5, the learning data includes a large number of data sets including input data including an outdoor temperature T₁ [°C], an indoor temperature T₂ [°C] and an air conditioning set temperature T₃ [°C], and an indoor temperature X [°C] T minutes later which is correct answer data corresponding to the input data.

Returning to Figure 4, after the processing of reading out the learning data, processing of generating a learned model is performed. In other words, the learning processing unit 111 first performs processing of associating the learning data with a root node (root node) (S13). Then, the learning processing unit 111 executes processing of storing the root node with which the learning data is associated in a queue (S15).

After the storage processing, the learning processing unit 111 executes processing of reading out the node from the queue (S16). Then, the learning processing unit 111 executes determination processing as to whether or not the node is a branch target node for the read-out node (S17). Whether or not the node is a branch target is determined on the basis of, for example, whether or not the target node is a node located at a maximum depth.

In a case where the node is a branch target (S17: No), the learning processing unit 111 executes processing of determining a branch condition for data held by each read-out node (S18). This branch condition can be determined using various methods known by a person skilled in the art. For example, after a plurality of division points are assumed, a case where division is performed with each temporary division point may be evaluated with a predetermined evaluation index, and a division point with the best evaluation may be set as a final branch condition. As is known by a person skilled in the art, as the evaluation index, for example, a Gini coefficient, a root mean square error (RMSE), or the like, can be employed.

After the branch condition is determined in each node, the learning processing unit 111 performs processing of sorting data into right and left child nodes on the basis of the branch condition (S19). After the sorting processing, the learning processing unit 111 executes processing of storing each child node in the queue (S21).

The learning processing unit 111 repeatedly executes these series of processes (S16, S17: Yes, S18 to S21) until the node read out from the queue is no longer the branch target.

On the other hand, in a case where the node is no longer the branch target, that is, in a case where a node of interest reaches the maximum depth (S17: No), the learning processing unit 111 determines that the learned model is generated and performs processing of storing the learned model in the storage unit 12 (S22), and the processing ends.

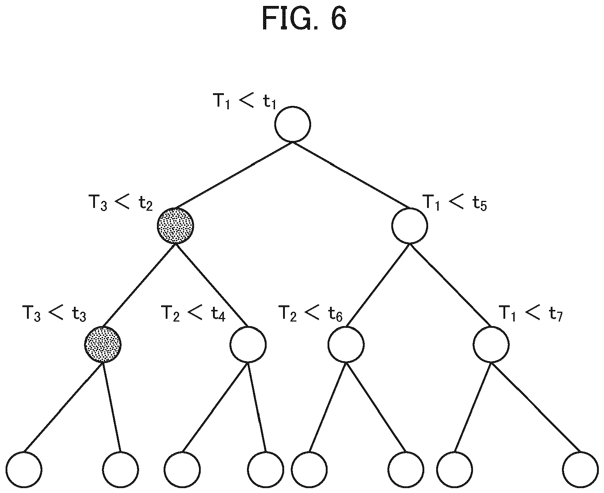

Figure 6 is a conceptual diagram according to one example of the learned model, that is, the decision tree generated by machine learning of the learning data.

At the root node, in a case where the outdoor temperature T₁ < t₁ is satisfied, data is sorted into a left child node, otherwise, the data is sorted into a right child node. In a similar manner, a condition of the set temperature T₃ < t₂ is associated with the left child node, and a condition of the outdoor temperature T₁ < t₅ is associated with the right child node.

Further, the left child node further branches into a left grandchild node and a right grandchild node, and a branch condition of the set temperature T₃ < t₃ is associated with the left grandchild node, and a branch condition of the indoor temperature T₂ < t₄ is associated with the right grandchild node. The right child node further branches into a left grandchild node and a right grandchild node, and a branch condition of the indoor temperature T₂ < t₆ is associated with the left grandchild node, and a branch condition of the outdoor temperature T₁ < t₇ is associated with the right grandchild node. Note that hereinafter, t₁ to t₇ may be referred to as division values.

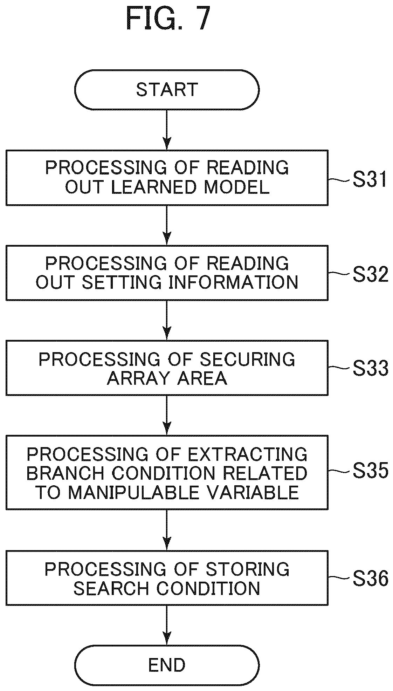

Figure 7 is a detailed flowchart of the processing of specifying the search condition (S3). As can be clear from Figure 7, when the processing is started, the search condition specification processing unit 112 executes processing of reading out the learned model (S31).

After the processing of reading out the learned model, the search condition specification processing unit 112 executes processing of reading out setting information (S32). Here, the setting information is information related to a changeable or manipulable variable among the input data. For example, in the present embodiment, the variable T₃ related to the set temperature is specified as a changeable variable.

Note that this setting information may be set in advance by a user, or the like, via the input unit 13.

According to such a configuration, it is possible to set which of the variables is changeable or manipulable in advance, so that it is possible to improve versatility.

After the processing of reading out the setting information, the search condition specification processing unit 112 executes processing of securing an array area in which a predetermined search condition is to be stored (S33).

After the processing of securing the array area, the search condition specification processing unit 112 performs processing of extracting a branch condition related to a changeable variable and stores the branch condition in the array area (S35). This extraction processing is performed while the node of interest is sequentially changed from the root node to a leaf node.

In the example in Figure 6, the branch conditions associated with the left child node and the left grandchild node of the left child node colored in gray are branch conditions related to the changeable variable T₃. Thus, in the example in Figure 6, t₂ < t₃ is extracted as the branch condition and stored in the array area.

After the extraction processing, the search condition specification processing unit 112 executes processing of storing the search condition in the storage unit 12 (S36). For example, t₂ < t₃ is stored as the search condition. Then, the processing ends.

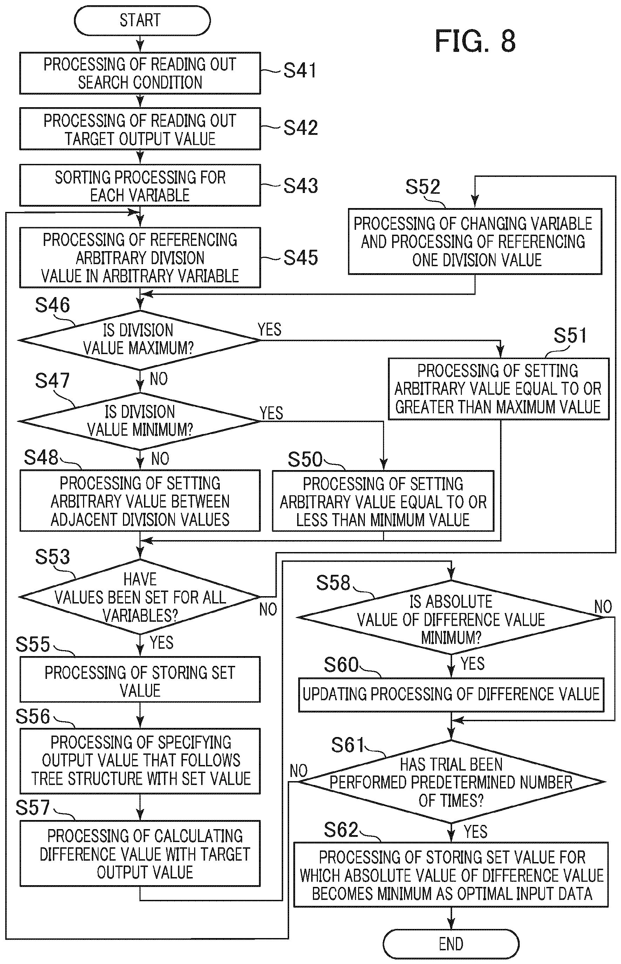

Figure 8 is a detailed flowchart of the processing of specifying the optimal input data (S4). When the processing is started, the input data specification processing unit 113 performs processing of reading out the search condition from the storage unit 12 (S41).

After the processing of reading out the search condition, the input data specification processing unit 113 performs processing of reading out a target output value from the storage unit 12 (S42). This target output value may be a value set by a user, or the like, in advance via the input unit 13.

According to such a configuration, it is possible to freely set a target output, so that it is possible to improve versatility.

After the processing of reading out the target output value, the input data specification processing unit 113 performs sorting processing for each variable (S43). For example, the input data specification processing unit 113 performs processing of rearranging the search conditions related to the respective variables sequentially in ascending order of the division value.

After the sorting processing, the input data specification processing unit 113 references arbitrary one variable and performs processing of referencing arbitrary one division value related to the variable (S45).

Then, the input data specification processing unit 113 performs determination processing as to whether or not the division value is a maximum division value among all the division values related to the variable (S46). In a case where the referenced division value is maximum (S46: Yes), the input data specification processing unit 113 performs processing of setting an arbitrary value equal to or greater than the maximum value as a candidate value (temporary input data) for the optimal input data (S51).

In a case where the referenced division value is not maximum (S46: No), the input data specification processing unit 113 performs determination processing as to whether or not the division value is a minimum division value among all the division values related to the variable (S47). In a case where the referenced division value is minimum (S47: Yes), the input data specification processing unit 113 performs processing of setting an arbitrary value equal to or less than the minimum value as a candidate value for the optimal input data (S50).

In a case where the referenced division value is not minimum (S47: No), that is, in a case where the referenced division value is neither maximum nor minimum, the input data specification processing unit 113 performs processing of setting an arbitrary value between adjacent division values as a candidate value for the optimal input data (S48).

If the processing of setting any value is completed, determination processing as to whether or not predetermined values have been set for all the variables is performed (S53). In a case where candidate values have not been set for all the variables yet (S53: No), processing of changing the variable and processing of referencing arbitrary one division value regarding the changed variable are performed (S52).

In a case where predetermined candidate values have been set for all the changeable variables (S53: Yes), the input data specification processing unit 113 performs processing of storing the set value for each variable (S55).

After the storage processing, processing of specifying a leaf node by following the tree structure related to the learned model with the set value or the set value and an unchangeable value and specifying an output value (or output data) of the decision tree from the leaf node is performed (S56). Note that while various methods known by a person skilled in the art can be employed as the processing of specifying the output value, for example, an average value of data associated with the reached leaf node may be employed.

After the processing of specifying the output value, the input data specification processing unit 113 performs processing of calculating a difference value between the output value and the target output value (or the target output data) (S57).

After the processing of calculating the difference value, the input data specification processing unit 113 performs determination processing as to whether or not an absolute value of the difference value is minimum compared to an existing difference value (S58). Note that a predetermined value is initially set as the difference value.

In a case where the absolute value of the difference value is minimum (S58: Yes), the input data specification processing unit 113 performs updating processing with the calculated difference value (S60). On the other hand, in a case where the absolute value of the difference value is not minimum (S58: No), the input data specification processing unit 113 does not perform updating processing of the difference value.

Note that while in the present embodiment, the output value is a one-dimensional value, and thus the difference value can be calculated as a simple difference, in a case where the output value is a multidimensional value, the difference value may be calculated on the basis of a multidimensional Euclidean distance, or the like.

Then, determination processing as to whether or not a series of processes (S45 to S60) has been executed only a predetermined number of times is performed (S61). In a case where it is determined that the processing has not been performed only a predetermined number of times (S61: No) as a result of the determination processing, a series of processes is executed again (S45 to S60).

On the other hand, in a case where the processing has been performed only a predetermined number of times (S61: Yes) as a result of the determination processing, processing of storing a set value for which the absolute value of the difference value becomes minimum in the storage unit 12 as the optimal input data is performed (S62). Then, the processing ends.

According to such a configuration, the search condition is specified by referencing the branch condition related to the manipulable variable among the branch conditions associated with the respective nodes of the tree structure model, so that it is possible to efficiently specify input data from which target output data or output data close to the target output data is to be generated.

### (2. Second embodiment)

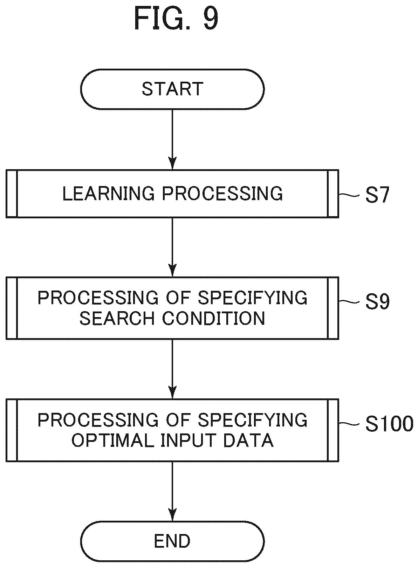

A second embodiment will be described with reference to Figure 9 to Figure 13. In the second embodiment, a learned model including a number of tree structures is utilized instead of the decision tree in the first embodiment.

Note that while in the present embodiment, a random forest will be described as an example of a learning model utilizing a number of tree structures, the present invention is not limited to such a configuration. In other words, other learning models obtained through ensemble learning, for example, a bugging learning model or a boosting learning model can be employed as the learning model including a number of trees.

### (2.1 Configuration)

A hardware configuration according to the second embodiment is substantially the same as the configuration according to the first embodiment, and thus, detailed description will be omitted.

However, in the present embodiment, the learning processing unit 111 generates a learned model including a plurality of tree structures using random forest algorithm.

### (2.2 Operation)

Figure 9 is a general flowchart regarding operation of the information processing apparatus 1 according to the second embodiment. As can be clear from Figure 9, the operation of the information processing apparatus 1 is substantially the same as that in the first embodiment in that the learning processing (S7), the processing of specifying the search condition (S9), and the processing of specifying the optimal input data (S100) are sequentially executed. However, as described below, the operation is different in details of the respective kinds of processing.

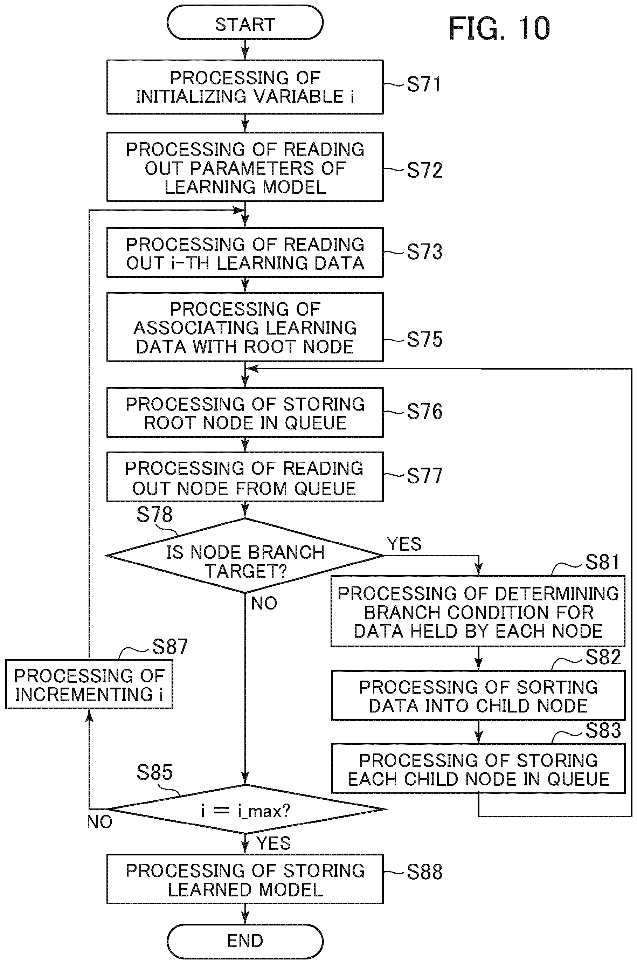

Figure 10 is a detailed flowchart of the learning processing (S7) according to the present embodiment. In the second embodiment, a so-called random forest is generated by generating a plurality of decision trees generated in the first embodiment.

When the processing is started, the learning processing unit 111 performs processing of initializing a variable i, for example, processing of setting the variable i to 1 (S71). Then, in a similar manner to the first embodiment, a learned tree structure model is generated on the basis of the learning data (S72 to S83).

Then, the learning processing unit 111 performs determination processing as to whether or not the variable i is equal to a maximum number i_max of trees, that is, whether or not only the predetermined number i_max of decision trees have been generated (S85). In a case where the variable i is not equal to i_max (S85: No), the learning processing unit 111 performs processing of incrementing the variable i and performs a series of processes (S73 to S83) again.

In a case where the variable i is equal to i_max (S85: Yes), the learning processing unit 111 performs processing of storing the generated plurality of tree structures in the storage unit 12 as the learned model, and the processing ends.

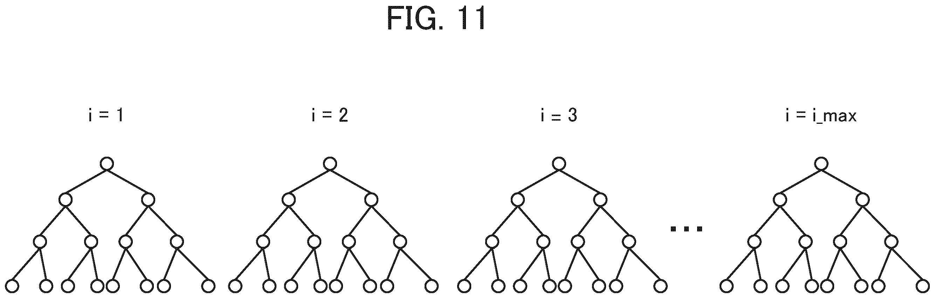

Figure 11 is a conceptual diagram of the random forest generated through the learning processing according to the present embodiment. As can be clear from Figure 11, i_max tree structures are generated through the learning processing. Predictive classification and a predicted value (regression output) can be generated on the basis of these tree structures.

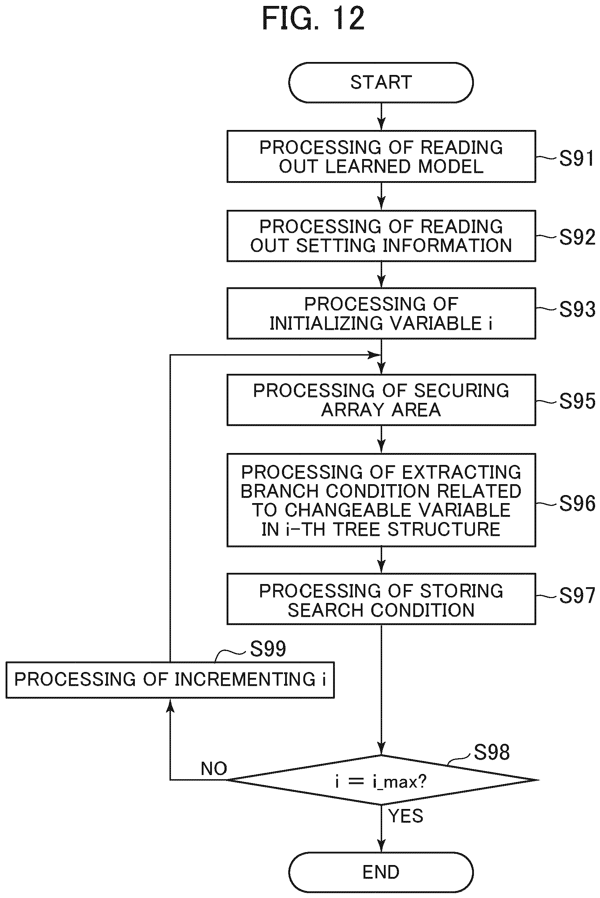

Figure 12 is a detailed flowchart of the processing of specifying the search condition (S9) according to the present embodiment. Also in the second embodiment, in a similar manner to the first embodiment, after the processing of reading out the learned model (S91) and the processing of reading out the setting information (S92) are performed, processing of extracting a branch condition related to a changeable variable and processing of storing the search condition (S97) are performed.

However, in the present embodiment, after the variable i is initialized (S93), the search condition specification processing unit 112 repeats a series of processes (S95 to S97) while incrementing the variable i (S99) until the variable i becomes equal to the maximum number of trees i_max (S98: No). In other words, by this means, processing of storing the search conditions for all the trees is performed.

If the processing of storing the search conditions has been performed for all the trees (S98: Yes), the processing ends.

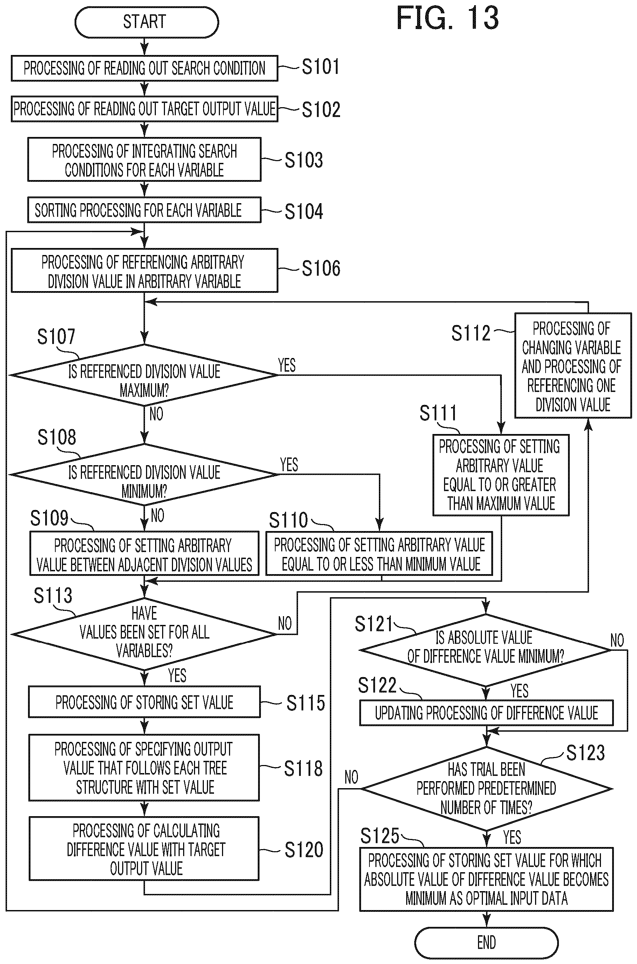

Figure 13 is a detailed flowchart of the processing of specifying the optimal input data according to the present embodiment. As can be clear from Figure 13, also in the present embodiment, in a similar manner to the first embodiment, the input data specification processing unit 113 performs the sorting processing (S103) for each variable after the processing of reading out the search condition (S101) and the processing of reading out the target output value (S102), and sets a candidate value (temporary input data) for the optimal input data for each variable (S106 to S113). However, in the present embodiment, before the sorting processing is performed, processing of integrating the search conditions extracted from the respective trees for each variable is performed.

According to such a configuration, it is possible to integrate and unify a plurality of branch conditions.

After values are set for all the variables, the input data specification processing unit 113 performs processing of storing the set values (S115) and performs processing of specifying the output value by performing processing of following the respective tree structures with the set values (S118). Note that this output value (or output data) is calculated on the basis of an output value (or output data) of each tree structure.

Then, the input data specification processing unit 113 performs updating processing of the difference value (S120 to S122) in a similar manner to the first embodiment.

The above-described series of processes (S105 to S122) is repeated only a predetermined number of times (S123: No). In a case where trial of the predetermined number of times has been completed (S123: Yes), the processing ends.

According to such a configuration, even in a case where learning algorithm including a number of tree structure models is used, the search condition is specified by referencing a branch condition related to a manipulable variable among the branch conditions associated with the respective nodes of the tree structure models, so that it is possible to efficiently specify input data from which target output data or output data close to the target output data is to be generated.

### (3. Others)

While in the above-described embodiments, a set value (candidate value) for which an output value becomes the closest to a target output value is set as optimal input data, an output aspect is not limited to such a configuration. Thus, for example, a plurality of candidate values for the optimal input data from which an output value close to the target output value is to be generated may be presented in order of closeness.

According to such a configuration, it is possible to select optimal input data from candidate values while taking into account knowledge, or the like, of a user, or the like.

Further, while in the above-described embodiments, description has been provided assuming that there is only one changeable variable (T₃), the present invention is not limited to such a configuration. Thus, a plurality of changeable variables may be included.

For example, it is assumed that a division value is extracted as t₃ < t₂ for a changeable variable 1, and a division value is extracted as t₈ < t₉ for a variable 2. In this event, a search range for the variable 1 is three sections of x₂ < t₃, t₃ ≤ x₂ ≤ t₂, and t₂ < x₃. In a similar manner, a search range for the variable 2 is three sections of x₄ < t₈, t₈ ≤ x₅ ≤ t₉, and t₉ < x₆. In this case, by searching nine combinations of (x₁, x₄), (x₁, x₅), (x₁, x₆), (x₂, x₄), (x₂, x₅), (x₂, x₆), (x₃, x₄), (x₃, x₅), and (x₃, x₆) with an arbitrary value, efficient search can be performed.

Further, while in the above-described embodiments, a limit is not set in a range of the value of the optimal input data, determination may be made using a condition regarding the range of the value of the optimal input data, and a candidate value that satisfies the condition may be set as the optimal input data.

For example, a case will be considered where vibration suppression in a motor is performed assuming that an input value is a current value and a parameter representing a magnitude of vibration of the motor is output. In this event, if a target output value of the parameter representing the magnitude of vibration is set at 0 for the purpose of suppressing vibration, vibration does not occur unless a current flows, and thus, there is a possibility that the optimal input data is specified as 0. However, this is not practical, and thus, for example, a predetermined condition of X (> 0) is set as the current value, and a candidate value that satisfies the condition may be set as the optimal input data.

While the embodiments of the present invention have been described above, the above-described embodiments merely indicate part of application examples of the present invention and are not intended to limit a technical scope of the present invention to specific configurations of the above-described embodiments. Further, the above-described embodiments can be combined as appropriate unless inconsistency occurs.

### Industrial Applicability

The present invention can be utilized in various industries, and the like, utilizing a machine learning technique.

### Reference Signs List

- 1: Information processing apparatus
- 11: Control unit
- 111: Learning processing unit
- 112: Search condition specification processing unit
- 113: Input data specification processing unit
- 12: Storage unit
- 13: Input unit
- 15: Communication unit
- 16: Display control unit
- 17: Audio output unit

## Claims

1. An information processing apparatus comprising:
a search condition specification processing unit that specifies a search condition on a basis of a branch condition associated with each node of one or a plurality of tree structure models and related to a manipulable variable; and
an input data specification processing unit that specifies input data from which target output data or output data close to the target output data is to be generated in the tree structure model on a basis of the search condition.

2. The information processing apparatus according to claim 1,
wherein the search condition specification processing unit further comprises:
a branch condition storage processing unit that performs determination processing regarding the branch condition for each node of the tree structure model and performs processing of storing the branch condition in a case where a branch condition related to a manipulable variable is associated with the node.

3. The information processing apparatus according to any one of claim 1 or 2,
wherein the input data specification processing unit inputs one or a plurality of pieces of temporary input data that satisfy the search condition to the tree structure model and specify temporary input data for which output data of the tree structure model corresponding to the temporary input data becomes the target output data or becomes closest to the target output data as the input data among the temporary input data.

4. The information processing apparatus according to any one of claims 1 to 3,
wherein the search condition specification processing unit further comprises a sorting processing unit that sorts the branch conditions in accordance with a magnitude relationship and specifies the sorted branch conditions as a search condition, and
the input data specification processing unit specifies an arbitrary value between adjacent branch conditions in the search condition as the input data.

5. The information processing apparatus according to any one of claims 1 to 4, further comprising:
a variable setting unit that performs setting regarding manipulability of a variable.

6. The information processing apparatus according to any one of claims 1 to 5, further comprising:
a target output data setting unit that sets content of the target output data.

7. The information processing apparatus according to claims 1 to 6,
wherein the input data specification processing unit further comprises:
a condition determination unit that determines whether or not the specified input data satisfies a predetermined condition.

8. The information processing apparatus according to claims 1 to 7,
wherein there are a plurality of pieces of the input data.

9. The information processing apparatus according to claims 1 to 8,
wherein there are a plurality of the tree structure models, and
the search condition specification processing unit further comprises a branch condition integration processing unit that generates the search condition by integrating the branch conditions.

10. The information processing apparatus according to any one of claims 1 to 7,
wherein the tree structure is a learned decision tree.

11. The information processing apparatus according to any one of claims 1 to 7,
wherein the plurality of tree structure models are obtained through ensemble learning.

12. An information processing method comprising:
a search condition specification processing step of specifying a search condition on a basis of a branch condition associated with each node of one or a plurality of tree structure models and related to a manipulable variable; and
an input data specification processing step of specifying input data from which target output data or output data close to the target output data is to be generated in the tree structure model on a basis of the search condition.

13. An information processing program comprising:
a search condition specification processing step of specifying a search condition on a basis of a branch condition associated with each node of one or a plurality of tree structure models and related to a manipulable variable; and
an input data specification processing step of specifying input data from which target output data or output data close to the target output data is to be generated in the tree structure model on a basis of the search condition.

14. An information processing system comprising:
a search condition specification processing unit that specifies a search condition on a basis of a branch condition associated with each node of one or a plurality of tree structure models and related to a manipulable variable; and
an input data specification processing unit that specifies input data from which target output data or output data close to the target output data is to be generated in the tree structure model on a basis of the search condition.
